# EUROPÄISCHE PATENTSCHRIFT

(11) **EP 3 477 167 B1**
(45) Veröffentlichungstag und Bekanntmachung des Hinweises auf die Patenterteilung: **09.06.2021**
(21) Anmeldenummer: 17818890.0
(22) Anmeldetag: 12.04.2017
(51) Int. Cl.: F16K 11/10, F01P 7/14, F01P 7/16, F16J 15/44, F16K 41/02

(54) **WÄRMEVERWALTUNGSMODUL**
THERMAL MANAGEMENT MODULE
MODULE DE GESTION THERMIQUE

(30) Priorität: 27.06.2016 CN 201610479998
(43) Veröffentlichungstag der Anmeldung: 01.05.2019
(73) Patentinhaber: Schaeffler Technologies AG & Co. KG, 91074 Herzogenaurach (DE)
(72) Erfinder: ZHOU, Huilan, Taicang Jiangsu 215400 (CN); GROSSKOPF, Uli, Adelsdorf 91325 (DE)
(86) Internationale Anmeldenummer: PCT/CN2017/080214
(87) Internationale Veröffentlichungsnummer: WO 2018/000893

(56) Entgegenhaltungen:
- WO-A1-00/57987
- CN-A- 101 245 865
- CN-A- 105 408 671
- GB-A- 2 160 662
- US-A1- 2004 129 912
- US-A1- 2016 010 535
- US-B2- 6 568 428

## Beschreibung

Die vorliegende Erfindung betrifft das technische Gebiet der Kühlsysteme und insbesondere ein Wärmemanagementmodul (Thermal Management Module).

Bei bekannten Motorkühlsystemen von Automobilen ist am Motor ein Wärmemanagementmodul montiert, das die Fließrichtung des Kühlmittels steuern kann, um bei zu niedriger Motortemperatur den Motor zu erwärmen und bei zu hoher Motortemperatur den Motor zu kühlen, sodass der Motor immer bei einer geeigneten Temperatur betrieben wird.

Das Wärmemanagementmodul umfasst ein Außengehäuse und eine in dessen Innern angeordnete Antriebswelle, wobei das Außengehäuse eine erste Innenkammer, einen Trennteil und eine zweite Innenkammer aufweist, die in Axialrichtung der Antriebswelle nacheinander angeordnet sind, wobei die erste und die zweite Innenkammer durch den Trennteil getrennt sind, der ein Durchgangsloch zum Hindurchführen der Antriebswelle aufweist, das eine Axialende der Antriebswelle in die erste Innenkammer hineingestreckt und mit einem Ventilkörper in der ersten Innenkammer drehfest verbunden ist und das andere Axialende der Antriebswelle in die zweite Innenkammer hineingestreckt und mit einer Antriebsvorrichtung in der zweiten Innenkammer verbunden ist. Wenn die Antriebsvorrichtung in Betrieb ist, treibt sie die Antriebswelle zu einer Rotation an und die Antriebswelle gibt die Rotation an den Ventilkörper weiter, um den Kühlmittelfluss zu starten oder zu unterbrechen und die Fließrichtung des Kühlmittels zu steuern.

Das Durchgangsloch weist eine erste und eine zweite Endöffnung auf, wobei die erste Endöffnung der ersten Innenkammer zugewandt ist, die zweite Endöffnung der zweiten Innenkammer zugewandt ist, das eine Axialende der Antriebswelle über die erste Endöffnung in die erste Innenkammer hineingestreckt ist und das andere Axialende über die zweite Endöffnung in die zweite Innenkammer hineingestreckt ist.

Am Außengehäuse ist eine mit der Luft verbundene Leckagepassage angeordnet, deren Eingang an der Lochwand des Durchgangslochs und gleichzeitig in Axialrichtung der Antriebswelle zwischen der ersten und der zweiten Endöffnung angeordnet ist. Wenn das Kühlmittel aus der ersten Innenkammer über die erste Endöffnung entweicht, fließt das entweichende Kühlmittel über die Leckagepassage nach außerhalb des Außengehäuses und es wird verhindert, dass das entweichende Kühlmittel in die zweite Innenkammer gelangt und die Antriebsvorrichtung beschädigt.

Um zu verhindern, dass der Anwender am Außenteil des Außengehäuses das entweichende Kühlmittel sieht, wird bei einem Wärmemanagementmodul des Stands der Technik ein Behälter hinzugefügt, der am Außenteil des Außengehäuses angeordnet ist und verwendet wird, um das entweichende Kühlmittel zu sammeln. Dieser Behälter weist einen Befestigungsstützfuß auf, der in die Leckagepassage des Außengehäuses hineingestreckt und auf die Leckagepassage abgestimmt ist, um den Behälter am Außengehäuse zu befestigen. Ein Wärmemanagementmodul wird in US2016/010535 gezeigt.

Ein anderes Wärmemanagementmodul ist mit der Serieneinführung des Audi EA888 Gen.3 im Jahr 2015 bekannt.

Allerdings bestehen bei einem wie oben beschriebenen Wärmemanagementmodul des Stands der Technik die folgenden Nachteile:
1. Der Behälter ist am Außenteil des Außengehäuses angeordnet und vergrößert den Platzbedarf des Wärmemanagementmoduls.
2. Bei der Befestigung des Behälters am Außengehäuse kann der Befestigungsstützfuß des Behälters leicht reißen und zur Beschädigung des Behälters führen.
3. Die Formgebung des Außengehäuses ist bereits relativ kompliziert und wenn außerdem noch eine auf den Befestigungsstützfuß des Behälters abgestimmte Struktur angeordnet werden muss, wird damit die Formgebung des Außengehäuses noch komplizierter und der Schwierigkeitsgrad der Bearbeitung erhöht sich.

Die von der vorliegenden Erfindung zu lösende Aufgabe betrifft die Vermeidung dieser Nachteile.

Um diese Aufgabe zu lösen, stellt die vorliegende Erfindung ein Wärmemanagementmodul bereit, umfassend ein Außengehäuse und eine im Innern des Außengehäuses angeordnete Antriebswelle, wobei das Außengehäuse eine erste Innenkammer, einen Trennteil und eine zweite Innenkammer aufweist, die in Axialrichtung der Antriebswelle nacheinander angeordnet sind, wobei die erste und die zweite Innenkammer durch den Trennteil getrennt sind, der ein Durchgangsloch zum Hindurchführen der Antriebswelle aufweist, das Durchgangsloch eine der ersten Innenkammer zugewandte erste Endöffnung und eine der zweiten Innenkammer zugewandte zweite Endöffnung aufweist, das eine Axialende der Antriebswelle über die erste Endöffnung in die erste Innenkammer hineingestreckt ist, das andere Axialende der Antriebswelle über die zweite Endöffnung in die zweite Innenkammer hineingestreckt ist und die zweite Innenkammer eine Antriebsvorrichtung aufnimmt, welche die Antriebswelle zu einer Rotation antreibt.

Im Außengehäuse ist eine Sammelkammer angeordnet, die einen an der Lochwand des Durchgangslochs geöffneten Sammeleingang aufweist, der in Axialrichtung zwischen der ersten und der zweiten Endöffnung angeordnet ist, wobei die Sammelkammer verwendet wird, um über den Sammeleingang ein Kühlmittel aus der ersten Innenkammer zu sammeln, das über die erste Endöffnung entweicht.

Das Außengehäuse umfasst ein erstes und ein zweites Gehäuse, die in Axialrichtung nacheinander angeordnet und demontierbar fest verbunden sind. Die erste Innenkammer ist am ersten Gehäuse angeordnet, die zweite Innenkammer ist am zweiten Gehäuse angeordnet, und der Trennteil umfasst einen ersten und eine zweiten Enddeckel, die in Axialrichtung einander gegenüberliegend angeordnet sind und die Sammelkammer umschließen. Dabei ist der erste Enddeckel am ersten Gehäuse und gleichzeitig an der einen Axialseite der ersten Innenkammer angeordnet, der zweite Enddeckel ist am zweiten Gehäuse und gleichzeitig an der einen Axialseite der zweiten Innenkammer angeordnet, das Durchgangsloch ist durch den ersten und den zweiten Enddeckel geführt, die erste Endöffnung ist am ersten Enddeckel angeordnet, und die zweite Endöffnung ist am zweiten Enddeckel angeordnet.

Wahlweise ist entweder am ersten oder am zweiten Enddeckel in Axialrichtung und der Oberfläche des anderen Enddeckels zugewandt eine hervorgestreckte Stufe angeordnet, die mit dem anderen Enddeckel in Kontakt steht und die Sammelkammer umschließt.

Wahlweise beträgt die Zahl der Stufen zwei und die beiden Stufen sind in Umfangsrichtung der Antriebswelle mit einem Zwischenraum angeordnet.

Wahlweise sind die Stufen kreisbogenförmig.

Wahlweise weist die Sammelkammer einen mit der Luft verbundenen Ausgang auf, der zur Ableitung des verdampfenden Kühlmittels aus der Sammelkammer dient. Wahlweise ist an der Stelle, an welcher der erste und der zweite Enddeckel miteinander in Kontakt kommen, ein Dichtungsteil angeordnet, um zu verhindern, dass das Kühlmittel in der Sammelkammer über die Kontaktstelle entweicht.

Wahlweise ist entweder am ersten oder am zweiten Enddeckel eine Konkavnut angeordnet, wobei ein Teil des Dichtungsteils in die Konkavnut eingesteckt ist und der andere Teil aus der Konkavnut hervorsteht und mit dem anderen Enddeckel eine Kontaktdichtung bildet.

Wahlweise ist das Dichtungsteil ein Gummiteil.

Wahlweise ist die demontierbare feste Verbindung eine Schraubverbindung.

Im Vergleich zum Stand der Technik weist die technische Lösung der vorliegenden Erfindung folgende Vorteile auf:
Wenn das Kühlmittel in der ersten Innenkammer über die erste Endöffnung des Durchgangslochs, die der ersten Innenkammer zugewandt ist, entweicht, fließt es über den an der Lochwand des Durchgangslochs angeordneten Sammeleingang in die Sammelkammer des Außengehäuses und wird in dieser gespeichert. Somit kann das entweichende Kühlmittel nicht nach außerhalb des Außengehäuses fließen und für den Anwender sichtbar werden und es kann auch nicht über die zweite Endöffnung des Durchgangslochs, die der zweiten Innenkammer zugewandt ist, in die zweite Innenkammer fließen und die Antriebsvorrichtung beschädigen. Da die Innenkammer im Innenteil des Außengehäuses die Funktion hat, das entweichende Kühlmittel zu sammeln, ist es nicht mehr notwendig, am Außenteil des Außengehäuses einen speziellen Behälter zum Sammeln des entweichenden Kühlmittels anzubringen. Auf diese Weise wird nicht nur der Platzbedarf des Wärmemanagementmoduls reduziert, sondern auch das Problem vermieden, dass der Behälter bei seiner Befestigung am Außengehäuse leicht beschädigt wird und außerdem ist es nicht mehr notwendig, am Außengehäuse eine Struktur vorzusehen, die auf den Befestigungsstützfuß des Behälters abgestimmt ist, womit der Schwierigkeitsgrad für die Bearbeitung des Außengehäuses verringert wird.
Fig. 1 zeigt eine dreidimensionale Darstellung eines Wärmemanagementmoduls in einem Ausführungsbeispiel der vorliegenden Erfindung.
Fig. 2 zeigt eine Schnittdarstellung des Wärmemanagementmoduls aus Fig. 1, wobei die Schnittfläche die Ebene auf der Zentralachse der Antriebswelle ist.
Fig. 3 zeigt eine schematische Darstellung der Lagebeziehung zwischen der Sammelkammer und dem Durchgangsloch am Außengehäuse für das Wärmemanagementmodul aus Fig. 2, wobei die Pfeil-Strichlinie in der Figur den Fließweg des Kühlmittels aus der ersten Innenkammer anzeigt.
Fig. 4 zeigt eine Seitendarstellung des zweiten Gehäuses des Wärmemanagementmoduls aus Fig. 2 in Axialrichtung der Antriebswelle gesehen.

Die vorliegende Erfindung stellt ein Wärmemanagementmodul bereit, das in diversen Bereichen eingesetzt werden kann, um eine zu steuernde Vorrichtung ständig bei einer geeigneten Temperatur in Betrieb zu halten. Im vorliegenden Ausführungsbeispiel ist die zu steuernde Vorrichtung ein Motor oder ein Getriebe eines Automobils oder eine die Antriebskraft für ein Automobil bereitstellende Batterie. In einem anderen Ausführungsbeispiel kann die zu steuernde Vorrichtung auch in einem anderen technischen Gebiet als dem der Automobile verwendet werden.

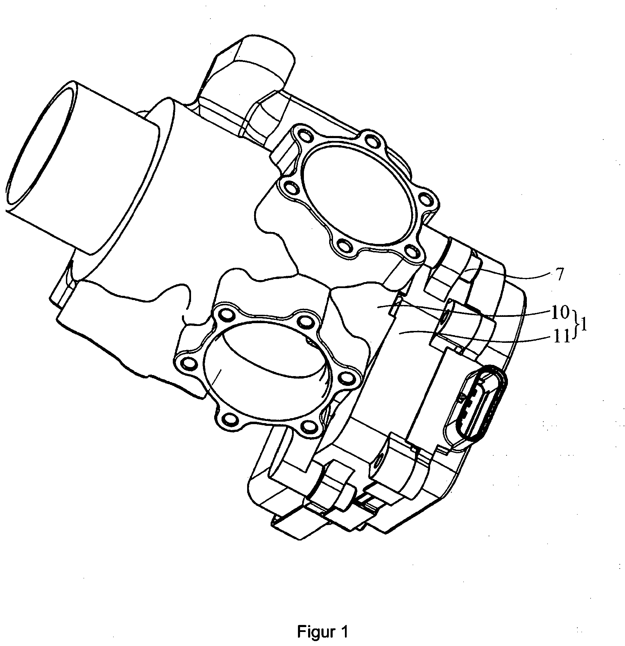

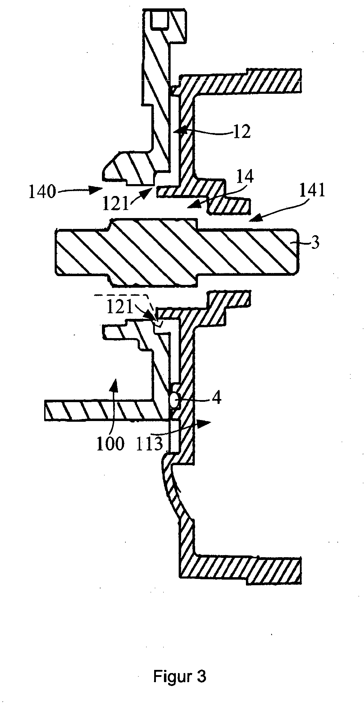

Wie in den Figuren 1 bis 3 gezeigt, umfasst das Wärmemanagementmodul des vorliegenden Ausführungsbeispiels ein Außengehäuse 1 und eine im Innern des Außengehäuses 1 angeordnete Antriebswelle 3. Das Außengehäuse 1 weist eine erste Innenkammer 100, einen Trennteil 13 und eine zweite Innenkammer 113 auf, die in Axialrichtung der Antriebswelle 3 nacheinander angeordnet sind. Dabei sind die erste Innenkammer 100 und die zweite Innenkammer 113 durch den Trennteil 13 getrennt, der ein Durchgangsloch 14 zum Hindurchführen der Antriebswelle 3 aufweist. Das Durchgangsloch 14 weist eine der ersten Innenkammer 100 zugewandte erste Endöffnung 140 und eine der zweiten Innenkammer 113 zugewandte zweite Endöffnung 141 auf, wobei das eine Axialende der Antriebswelle 3 über die erste Endöffnung 140 in die erste Innenkammer 100 hineingestreckt und mit einem Ventilkörper 2 drehfest verbunden ist und das andere Axialende der Antriebswelle 3 über die zweite Endöffnung 141 in die zweite Innenkammer 113 hineingestreckt und mit einer Antriebsvorrichtung (in der Figur nicht dargestellt) in der zweiten Innenkammer 113 verbunden ist. Wenn die Antriebsvorrichtung in Betrieb ist, treibt sie die Antriebswelle 3 zu einer Rotation an und der Ventilkörper 2 kann unter Mitnahme durch die Antriebswelle 3 rotieren. Der rotierende Ventilkörper 2 startet oder unterbricht den Kühlmittelfluss und steuert die Fließrichtung des Kühlmittels.

Am Außengehäuse 1 ist weiterhin eine Sammelkammer 12 angeordnet, die einen Sammeleingang 121 aufweist, der in Axialrichtung der Antriebswelle 3 zwischen der ersten Endöffnung 140 und der zweiten Endöffnung 141 des Durchgangslochs 14 angeordnet und an der Lochwand des Durchgangslochs 14 geöffnet ist. Wenn das Kühlmittel in der ersten Innenkammer 100 über die erste Endöffnung 140 entweicht, kann es nicht über die zweite Endöffnung 141 in die zweite Innenkammer 113 fließen, sondern gelangt über den Sammeleingang 121 in die Sammelkammer 12 und wird darin gespeichert. Somit kann das entweichende Kühlmittel nicht nach außerhalb des Außengehäuses 1 fließen und für den Anwender sichtbar werden und es kann auch nicht die Antriebsvorrichtung dadurch beschädigen, dass es in die zweite Innenkammer 113 fließt.

Das Außengehäuse 1 umfasst ein erstes Gehäuse 10 und ein zweites Gehäuse 11, die in Axialrichtung der Antriebswelle 3 nacheinander angeordnet und demontierbar fest verbunden sind. In der technischen Lösung der vorliegenden Erfindung bedeutet die sogenannte demontierbar feste Verbindung, dass es möglich ist, ohne das erste Gehäuse 10 und das zweite Gehäuse 11 zu beschädigen, die Verbindung des ersten Gehäuses 10 und des zweiten Gehäuses 11 zu lösen und somit das erste Gehäuse 10 und das zweite Gehäuse 11 zu trennen.

Die demontierbar feste Verbindung ist vorliegend eine Schraubverbindung, d.h. das erste Gehäuse 10 und das zweite Gehäuse 11 sind über Schrauben 7 fest miteinander verbunden, sodass eine Demontage des ersten Gehäuse 10 und des zweiten Gehäuses 11 sehr einfach ist. Natürlich können in einem anderen Ausführungsbeispiel das erste Gehäuse 10 und das zweite Gehäuse 11 auch durch eine andere Methode demontierbar fest verbunden sein, wie beispielsweise über eine Klemmverbindung.

Die erste Innenkammer 100 ist am ersten Gehäuse 10 angeordnet, die zweite Innenkammer 113 ist am zweiten Gehäuse 11 angeordnet und der Trennteil 13 umfasst einen ersten Enddeckel 102 und einen zweiten Enddeckel 114, die in Axialrichtung der Antriebswelle 3 einander gegenüberliegend angeordnet sind und die Sammelkammer 12 umschließen. Der erste Enddeckel 102 ist am ersten Gehäuse 10 und gleichzeitig an der einen Axialseite der ersten Innenkammer 100 angeordnet. Der zweite Enddeckel 114 ist am zweiten Gehäuse 11 und gleichzeitig an der einen Axialseite der zweiten Innenkammer 113 angeordnet. Das Durchgangsloch 14 ist durch den ersten Enddeckel 102 und den zweiten Enddeckel 114 geführt. Die erste Endöffnung 140 ist am ersten Enddeckel 102 angeordnet. Die zweite Endöffnung 141 ist am zweiten Enddeckel 114 angeordnet. Die Antriebswelle 3 ist drehbar am ersten Enddeckel 102 und am zweiten Enddeckel 114 abgestützt.

Das erste Gehäuse 10 und das zweite Gehäuse 11 können getrennt bearbeitet und anschließend aneinander montiert werden, sodass der erste Enddeckel 102 und der zweite Enddeckel 114 die Sammelkammer 12 umschließen. Dadurch wird die Bearbeitung des Außengehäuses 1 und der Sammelkammer 12 vereinfacht. Natürlich kann das Außengehäuse 1 durch eine Feinbearbeitung auch als Einheit gebildet werden.

Das erste Gehäuse 10 umfasst weiterhin einen ersten Hohlzylinderteil 101, dessen eines Axialende mit dem ersten Enddeckel 102 fest verbunden ist und das gleichzeitig die erste Innenkammer 100 umschließt. Das zweite Gehäuse 11 umfasst einen zweiten Hohlzylinderteil 110, dessen eines Axialende mit dem zweiten Enddeckel 114 fest verbunden ist und dessen anderes Axialende mit einem dritten Enddeckel 115 fest verbunden ist. Der zweite Hohlzylinderteil 110, der zweite Enddeckel 114 und der dritte Enddeckel 115 umschließen die zweite Innenkammer 113.

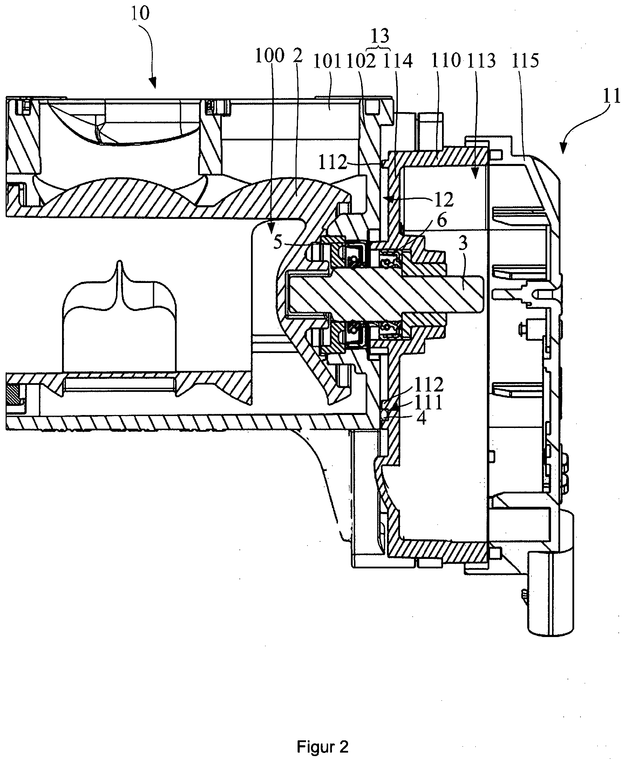

Wie in Fig. 2 gezeigt, ist an der Stelle, an welcher der erste Enddeckel 102 und der zweite Enddeckel 114 miteinander in Kontakt stehen, ein Dichtungsteil 4 angeordnet, das verhindern kann, dass das Kühlmittel aus der Sammelkammer 12 über die Kontaktstelle entweicht. Auf diese Weise kann, selbst wenn an der Kontaktstelle des ersten Enddeckels 102 und des zweiten Enddeckels 114 aufgrund von Bearbeitungstoleranzen ein winziger Spalt besteht, durch die Dichtungswirkung des Dichtungsteils 4 verhindert werden, dass das Kühlmittel aus der Sammelkammer 12 über den Spalt nach außerhalb des Außengehäuses 1 entweicht. Damit wird die Wahrscheinlichkeit verringert, dass Kühlmittel aus der Sammelkammer 12 nach außerhalb des Außengehäuses 1 entweicht.

Im vorliegenden Ausführungsbeispiel ist das Dichtungsteil 4 ein Gummiteil, das sich unter der Quetschwirkung des ersten Enddeckels 102 und des zweiten Enddeckels 114 verformt und mit dem ersten Enddeckel 102 und dem zweiten Enddeckel 114 eine Kontaktdichtung bildet.

Am zweiten Enddeckel 114 ist eine Konkavnut 111 angeordnet, wobei ein Teil des Dichtungsteils 4 in die Konkavnut 111 eingesteckt ist und der andere Teil aus der Konkavnut 111 hervorsteht und mit dem ersten Enddeckel 102 eine Kontaktdichtung bildet. Bei der Montage des Wärmemanagementmoduls wird zuerst das Dichtungsteil 4 am zweiten Enddeckel 114 befestigt und dann werden das zweite Gehäuse 11 und das erste Gehäuse 10 demontierbar fest verbunden.

In einem geänderten Ausführungsbeispiel ist die Konkavnut 111 am ersten Enddeckel 102 angeordnet und das in der Konkavnut 111 montierte Dichtungsteil 4 bildet mit dem zweiten Enddeckel 114 eine Kontaktdichtung. Bei der Montage des Wärmemanagementmoduls wird zuerst das Dichtungsteil 4 am ersten Enddeckel 102 befestigt und dann werden das erste Gehäuse 10 und das zweite Gehäuse 11 demontierbar fest verbunden.

Im Vergleich mit dem zweiten Gehäuse 11 ist die Formgebung des ersten Gehäuses 10 komplizierter, weshalb bei einer Anordnung der Konkavnut 111 am ersten Gehäuse 10 die Schwierigkeit bei der Bearbeitung des ersten Gehäuses 10 zunimmt und somit eine höhere Ausschussrate zur Folge hat. Um das Auftreten dieses Problems zu vermeiden, ist die Konkavnut 111 vorzugsweise am zweiten Gehäuse 11 angeordnet.

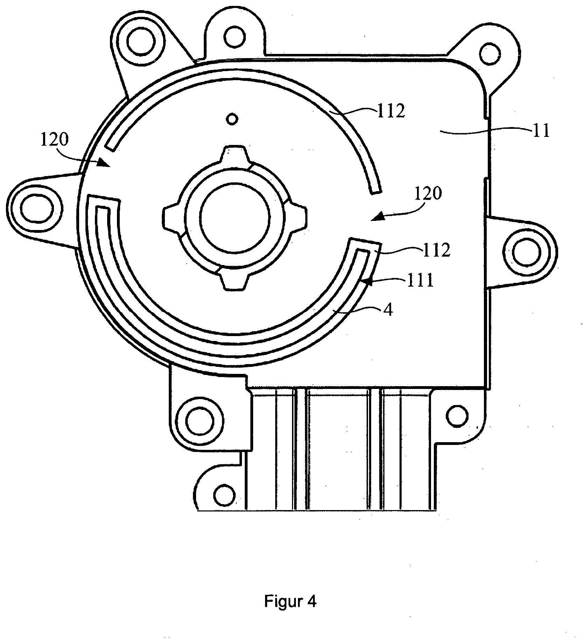

Wie in Fig. 2 und Fig. 4 gezeigt, ist an der Oberfläche des zweiten Enddeckels 114, die in Axialrichtung der Antriebswelle 3 dem ersten Gehäuse 10 zugewandt ist, eine in Axialrichtung hervorgestreckte Stufe 112 angeordnet, die mit dem ersten Enddeckel 102 in Kontakt steht, um die Sammelkammer 12 zu umringen.

Die Zahl der Stufen 112 beträgt zwei, wobei die beiden Stufen 112 in Umfangsrichtung der Antriebswelle 3 mit einem Zwischenraum angeordnet sind, der zwischen den beiden Stufen 112 einen mit der Luft verbundenen Ausgang 120 bildet. Die Zahl der Ausgänge 120 beträgt zwei. Mit anderen Worten ist die Sammelkammer 12 eine nicht geschlossene Kammer mit einem Ausgang 120. Nach dem Verdampfen des in der Sammelkammer 12 gesammelten Kühlmittels kann dieses über den Ausgang 120 abgeleitet werden. Auf diese Weise wird gleichzeitig mit dem Sammeln des entweichenden Kühlmittels in der Sammelkammer 12 das Kühlmittel in der Sammelkammer 12 nach außerhalb des Außengehäuses 1 abgeleitet, sodass selbst nach einer gewissen Zeit der Benutzung des Wärmemanagementmoduls in der Sammelkammer 12 immer noch Platz bleibt, um weiterhin entweichendes Kühlmittel zu sammeln und das Problem verhindert wird, dass aufgrund von zu wenig Platz in der Sammelkammer 12 das Sammeln von entweichendem Kühlmittel nicht fortgesetzt werden kann.

Im vorliegenden Ausführungsbeispiel ist die für die Montage des Dichtungsteils 4 verwendete Konkavnut 111 an einer der beiden Stufen 112 angeordnet. Bei der Montage des Wärmemanagementmoduls in einer Anwendungsumgebung ist die Stufe 112, an der das Dichtungsteil 4 montiert ist, unterhalb der anderen Stufe 112 angeordnet, an der kein Dichtungsteil 4 montiert ist, sodass das Kühlmittel in der Sammelkammer 12 mit der Stufe 112 in Kontakt steht, an der das Dichtungsteil 4 montiert ist, nicht aber mit der Stufe 112, an der kein Dichtungsteil 4 montiert ist. Da an der unteren Stufe 112 das Dichtungsteil 4 montiert ist, kann durch die Dichtungswirkung des Dichtungsteils 4 verhindert werden, dass das Kühlmittel an der Stelle entweicht, an der die untere Stufe 112 und das erste Gehäuse 10 miteinander in Kontakt stehen.

In einem geänderten Ausführungsbeispiel ist an beiden Stufen 112 jeweils eine Konkavnut 111 angeordnet. In jeder Konkavnut 111 ist jeweils ein Dichtungsteil 4 montiert, sodass an den Stellen, an denen die beiden Stufen 112 am zweiten Gehäuse 11 mit dem ersten Gehäuse 10 in Kontakt stehen, jeweils ein Dichtungsteil 4 angeordnet ist. Auf diese Weise ist bei der Montage des Wärmemanagementmoduls in einer Anwendungsumgebung eine beliebige Anordnung der einander gegenüberliegenden oberen und unteren Position der beiden Stufen 112 möglich.

Im vorliegenden Ausführungsbeispiel entspricht in Axialrichtung der Antriebswelle 3 gesehen die Form des Dichtungsteils 4 der Form der Stufen 112. Konkret sind das Dichtungsteil 4 und die Stufen 112 jeweils kreisbogenförmig, wobei die beiden Stufen 112 auf demselben Umkreis verteilt sind und die axiale Schnittfläche der Sammelkammer 12 kreisförmig ist. Die Form der Stufen 112 und des Dichtungsteils 4 kann in Axialrichtung der Antriebswelle 3 gesehen auch U-förmig, ellipsoidbogenförmig o. ä. sein.

In einem geänderten Ausführungsbeispiel kann die Zahl der Stufen 112 eins betragen, wobei diese eine Kreisform bildet und eine Unterbrechungsöffnung aufweist, die einen Ausgang 120 bildet.

In einem anderen geänderten Ausführungsbeispiel ist die Stufe 112 an der Oberfläche des ersten Enddeckels 102 angeordnet, welche in Axialrichtung der Antriebswelle 3 dem zweiten Gehäuse 11 zugewandt ist. Die Stufe 112 und das zweite Gehäuse 11 stehen miteinander in Kontakt und umschließen die Sammelkammer 12.

Wie in Fig. 2 gezeigt, sind auf der Antriebswelle 3 in Axialrichtung mit Zwischenräumen ein erster Dichtungsring 5 und ein zweiter Dichtungsring 6 aufgesetzt. Der erste Dichtungsring 5 soll verhindern, dass das Kühlmittel aus der ersten Innenkammer 100 zwischen dem ersten Enddeckel 102 und der Antriebswelle 3 entweicht. Der zweite Dichtungsring 6 soll verhindern, dass das Kühlmittel zwischen dem zweiten Enddeckel 114 und der Antriebswelle 3 in die zweite Innenkammer 113 entweicht. Wenn das Kühlmittel aus der ersten Innenkammer 100 am ersten Dichtungsring 5 entweicht, wird es direkt in der Sammelkammer 12 gesammelt.

Die Antriebsvorrichtung umfasst in der zweiten Innenkammer 113 eine E-Maschine, deren Ausgangsende mit dem in die zweite Innenkammer 113 gestreckten einen Axialende der Antriebswelle 3 verbunden ist, sodass das von der E-Maschine ausgegebene Drehmoment an die Antriebswelle 3 übertragen werden kann.

In einem geänderten Ausführungsbeispiel umfasst die Antriebsvorrichtung weiterhin einen Zahnrad-Untersetzungsmechanismus, wobei das Ausgangsende der E-Maschine mit dem Eingangsende des Zahnrad-Untersetzungsmechanismus verbunden ist und das Ausgangsende des Zahnrad-Untersetzungsmechanismus mit dem in die zweite Innenkammer 113 gestreckten einen Axialende der Antriebswelle 3 verbunden ist. Auf diese Weise wird das von der E-Maschine ausgegebene Drehmoment über den Zahnrad-Untersetzungsmechanismus an die Antriebswelle 3 übertragen.

In einem formveränderten Beispiel des vorliegenden Ausführungsbeispiels kann die Zahl der Stufen 112 eins betragen, wobei diese eine Kreisform bildet und eine Unterbrechungsöffnung aufweist und die Unterbrechungsöffnung einen Ausgang 120 bildet.

In einem anderen formveränderten Beispiel des vorliegenden Ausführungsbeispiels ist die Stufe 112 an der Oberfläche des ersten Enddeckels 102 angeordnet, welche in Axialrichtung der Antriebswelle 3 dem zweiten Gehäuse 11 zugewandt ist und die Stufe 112 und das zweite Gehäuse 11 stehen miteinander in Kontakt und umschließen die Sammelkammer 12.

Es ist anzumerken, dass in der technischen Lösung der vorliegenden Erfindung die Art und Weise, wie das erste Gehäuse 10 und das zweite Gehäuse 11 die Sammelkammer 12 umschließen, nicht auf die angegebenen Ausführungsbeispiele beschränkt ist. Außerdem ist die Art und Weise, wie der Ausgang 120 an der Sammelkammer 12 konstruiert ist und die Art und Weise, wie an der Stelle des gegenseitigen Kontakts des ersten Gehäuses 10 und des zweiten Gehäuses 11 das Dichtungsteil 4 angeordnet ist, nicht auf das angegebene Ausführungsbeispiel beschränkt ist.

Wie in Fig. 2 gezeigt, sind im vorliegenden Ausführungsbeispiel auf der Antriebswelle 3 in Axialrichtung mit Zwischenräumen ein erster Dichtungsring 5 und ein zweiter Dichtungsring 6 aufgesetzt, wobei der erste Dichtungsring 5 verwendet wird, um zu verhindern, dass das Kühlmittel aus der ersten Innenkammer 100 zwischen dem ersten Enddeckel 102 und der Antriebswelle 3 entweicht und der zweite Dichtungsring 6 verwendet wird, um zu verhindern, dass das Kühlmittel zwischen dem zweiten Enddeckel 114 und der Antriebswelle 3 in die zweite Innenkammer 113 entweicht. Wenn das Kühlmittel aus der ersten Innenkammer 100 am ersten Dichtungsring 5 entweicht, wird es direkt in der Sammelkammer 12 gesammelt.

Im vorliegenden Ausführungsbeispiel umfasst die Antriebsvorrichtung in der zweiten Innenkammer 113 eine E-Maschine, wobei das Ausgangsende der E-Maschine mit dem in die zweite Innenkammer 113 gestreckten einen Axialende der Antriebswelle 3 verbunden ist, sodass das von der E-Maschine ausgegebene Drehmoment an die Antriebswelle 3 übertragen werden kann.

In einem Änderungsbeispiel des vorliegenden Ausführungsbeispiels umfasst die Antriebsvorrichtung weiterhin einen Zahnrad-Untersetzungsmechanismus, wobei das Ausgangsende der E-Maschine mit dem Eingangsende des Zahnrad-Untersetzungsmechanismus verbunden ist und das Ausgangsende des Zahnrad-Untersetzungsmechanismus mit dem in die zweite Innenkammer 113 gestreckten einen Axialende der Antriebswelle 3 verbunden ist. Auf diese Weise wird das von der E-Maschine ausgegebene Drehmoment über den Zahnrad-Untersetzungsmechanismus an die Antriebswelle 3 übertragen. Es ist anzumerken, dass in der technischen Lösung der vorliegenden Erfindung der Aufbau der Antriebsvorrichtung nicht auf das angegebene Ausführungsbeispiel beschränkt ist.

Obwohl die vorliegende Erfindung wie obenstehend offengelegt wurde, ist sie doch nicht darauf beschränkt. Ein beliebiger Fachmann des technischen Gebiets kann, ohne Idee und Umfang der vorliegenden Erfindung zu verlassen, alle Arten von Veränderungen und Korrekturen vornehmen. Daher gilt als

Schutzumfang der vorliegenden Erfindung der in den Patentansprüchen festgelegte Umfang.

## Patentansprüche

1. Wärmemanagementmodul, umfassend ein Außengehäuse (1) und eine im Innern des Außengehäuses (1) angeordnete Antriebswelle (3), wobei das Außengehäuse (1) eine erste Innenkammer (100), einen Trennteil (13) und eine zweite Innenkammer (113) aufweist, die in Axialrichtung der Antriebswelle (3) nacheinander angeordnet sind, wobei die erste und die zweite Innenkammer (100, 113) durch den Trennteil (13) getrennt sind, der ein Durchgangsloch (14) zum Hindurchführen der Antriebswelle (3) aufweist, das Durchgangsloch (14) eine der ersten Innenkammer (100) zugewandte erste Endöffnung (140) und eine der zweiten Innenkammer (113) zugewandte zweite Endöffnung (141) aufweist, das eine Axialende der Antriebswelle (3) über die erste Endöffnung (140) in die erste Innenkammer (100) hineingestreckt ist, das andere Axialende der Antriebswelle (3) über die zweite Endöffnung (141) in die zweite Innenkammer (113) hineingestreckt ist und die zweite Innenkammer (113) eine Antriebsvorrichtung aufnimmt, welche die Antriebswelle (3) zu einer Rotation antreibt, und wobei am Außengehäuse (1) eine Sammelkammer (12) angeordnet ist, um Kühlmittel aus der ersten Innenkammer (100) zu sammeln, das über die erste Endöffnung (140) entweicht, **dadurch gekennzeichnet, dass** die Sammelkammer (12) einen an der Lochwand des Durchgangslochs (14) geöffneten Sammeleingang (121) aufweist, der in Axialrichtung zwischen der ersten und der zweiten Endöffnung (140, 141) angeordnet ist, wobei das Außengehäuse (1) ein erstes und ein zweites Gehäuse (10, 11) umfasst, die in Axialrichtung nacheinander angeordnet und demontierbar fest verbunden sind, wobei die erste Innenkammer (100) am ersten Gehäuse (10) angeordnet ist, die zweite Innenkammer (113) am zweiten Gehäuse (11) angeordnet ist und der Trennteil (13) einen ersten und eine zweiten Enddeckel (102, 114) umfasst, die in Axialrichtung einander gegenüberliegend angeordnet sind und die Sammelkammer (12) umschließen, wobei der erste Enddeckel (102) am ersten Gehäuse (10) und gleichzeitig an der einen Axialseite der ersten Innenkammer (100) angeordnet ist, der zweite Enddeckel (114) am zweiten Gehäuse (11) und gleichzeitig an der einen Axialseite der zweiten Innenkammer (113) angeordnet ist, das Durchgangsloch (14) durch den ersten und den zweiten Enddeckel (102, 114) geführt ist, die erste Endöffnung (140) am ersten Enddeckel (102) angeordnet ist und die zweite Endöffnung (141) am zweiten Enddeckel (114) angeordnet ist.

2. Wärmemanagementmodul nach Anspruch 1, **dadurch gekennzeichnet, dass** entweder am ersten oder am zweiten Enddeckel (102, 114) eine hervorgestreckte Stufe (112) angeordnet ist, die in Axialrichtung der Oberfläche des anderen Enddeckels (102, 114) zugewandt ist, mit dem anderen Enddeckel (102, 114) in Kontakt steht und die Sammelkammer (12) umschließt.

3. Wärmemanagementmodul nach Anspruch 2, **dadurch gekennzeichnet, dass** die Zahl der Stufen (112) zwei beträgt und die beiden Stufen (112) in Umfangsrichtung der Antriebswelle (3) mit einem Zwischenraum angeordnet sind.

4. Wärmemanagementmodul nach Anspruch 3, **dadurch gekennzeichnet, dass** die Stufen (112) eine Kreisbogenform haben.

5. Wärmemanagementmodul nach einem der Ansprüche 1 bis 4, **dadurch gekennzeichnet, dass** die Sammelkammer (12) einen mit der Luft verbundenen Ausgang (120) aufweist, der zur Ableitung des verdampfenden Kühlmittels aus der Sammelkammer (12) dient.

6. Wärmemanagementmodul nach einem der Ansprüche 1 bis 4, **dadurch gekennzeichnet, dass** an der Stelle, an welcher der erste und der zweite Enddeckel (102, 114) miteinander in Kontakt kommen, ein Dichtungsteil (4) angeordnet ist, um zu verhindern, dass das Kühlmittel aus der Sammelkammer (12) über die Kontaktstelle entweicht.

7. Wärmemanagementmodul nach Anspruch 6, **dadurch gekennzeichnet, dass** entweder am ersten oder am zweiten Enddeckel (102, 114) eine Konkavnut (111) angeordnet ist, wobei ein Teil des Dichtungsteils (4) in die Konkavnut (111) eingesteckt ist und der andere Teil aus der Konkavnut (114) hervorsteht und mit dem anderen Enddeckel (102, 114) eine Kontaktdichtung bildet.

8. Wärmemanagementmodul nach Anspruch 6, **dadurch gekennzeichnet, dass** das Dichtungsteil (4) ein Gummiteil ist.

9. Wärmemanagementmodul nach einem der Ansprüche 1 bis 4, **dadurch gekennzeichnet, dass** die demontierbare feste Verbindung eine Schraubverbindung ist.

## Claims

1. A thermal management module, comprising an outer housing (1) and a drive shaft (3) arranged inside the outer housing (1), wherein the outer housing (1) has a first inner chamber (100), a separator (13) and a second inner chamber (113), which are arranged one after the other in the axial direction of the drive shaft (3), wherein the first and second inner chambers (100, 113) are separated by the separator (13) which has a through hole (14) for the passage of the drive shaft (3), the through hole (14) has a first end opening (140) facing the first inner chamber (100) and a second end opening (141) facing the second inner chamber (113), the one axial end of the drive shaft (3) is extended into the first inner chamber (100) via the first end opening (140), the other axial end of the drive shaft (3) is extended via the second end opening (141) into the second inner chamber (113) and the second inner chamber (113) receives a drive device which drives the drive shaft (3) to rotate, and wherein a collecting chamber (12) is arranged on the outer housing (1) in order to collect coolant from the first inner chamber (100) which escapes via the first end opening (140), **characterised in that** the collecting chamber (12) has a collecting inlet (121) which is open on the hole wall of the through hole (14) and which is arranged between the first and the second end opening (140, 141) in the axial direction, wherein the outer housing (1) has a first and a second housing (10, 11) which are arranged one after the other in the axial direction and are fixedly connected in a removable manner, wherein the first inner chamber (100) is arranged on the first housing (10), the second inner chamber (113) is arranged on the second housing (11) and the separator (13) comprises a first and a second end cover (102, 114), which are arranged opposite one another in the axial direction and which enclose the collecting chamber (12), wherein the first end cover (102) is arranged on the first housing (10) and at the same time on one of the axial sides of the first inner chamber (100), the second end cover (114) is arranged on the second housing (11) and at the same time on one of the axial sides of the second inner chamber (113), the through hole (14) is guided through the first and the second end cover (102, 114), the first end opening (140) is arranged on the first end cover (102) and the second end opening (141) is arranged on the second end cover (114).

2. The thermal management module according to claim 1, **characterised in that** either on the first or on the second end cover (102, 114) a protruding step (112) is arranged which faces the surface of the other end cover (102, 114) in the axial direction, is in contact with the other end cover (102, 114) and encloses the collecting chamber (12).

3. The thermal management module according to claim 2, **characterised in that** the number of steps (112) is two and the two steps (112) are arranged in the circumferential direction of the drive shaft (3) with a gap.

4. The thermal management module according to claim 3, **characterised in that** the steps (112) have a circular arc shape.

5. The thermal management module according to one of claims 1 to 4, **characterised in that** the collecting chamber (12) has an outlet (120) connected to the air and used to discharge the evaporating coolant from the collecting chamber (12).

6. The thermal management module according to one of claims 1 to 4, **characterised in that** at the point at which the first and second end covers (102, 114) come into contact with one another a sealing part (4) is arranged to prevent the coolant escaping from the collecting chamber (12) via the contact point.

7. The thermal management module according to claim 6, **characterised in that** a concave groove (111) is arranged either on the first or on the second end cover (102, 114), wherein a part of the sealing part (4) is inserted into the concave groove (111) and the other part protrudes from the concave groove (114) and forms a contact seal with the other end cover (102, 114).

8. The thermal management module according to claim 6, **characterised in that** the sealing part (4) is a rubber part.

9. The thermal management module according to one of claims 1 to 4, **characterised in that** the removable fixed connection is a screw connection.

## Revendications

1. Module de gestion thermique, comprenant un boîtier externe (1) et un arbre d'entraînement (3) disposé à l'intérieur du boîtier externe (1), le boîtier externe (1) présentant une première chambre interne (100), un séparateur (13) et une seconde chambre interne (113), qui sont disposés l'un après l'autre dans la direction axiale de l'arbre d'entraînement (3), les première et seconde chambres internes (100, 113) étant séparées par le séparateur (13) qui présente un trou traversant (14) traversé par l'arbre d'entraînement (3), le trou traversant (14) présentant une première ouverture d'extrémité (140) faisant face à la première chambre interne (100) et une seconde ouverture d'extrémité (141) faisant face à la seconde chambre interne (113), l'une extrémité axiale de l'arbre d'entraînement (3) s'étendant pour s'insérer dans la première chambre interne (100) par le biais de la première ouverture d'extrémité (140), l'autre extrémité axiale de l'arbre d'entraînement (3) s'étendant pour s'insérer dans la seconde chambre interne (113) par le biais de la seconde ouverture d'extrémité (141) et la seconde chambre interne (113) recevant un dispositif d'entraînement qui fait tourner l'arbre d'entraînement (3) et une chambre de collecte (12) étant disposée sur le boîtier externe (1) afin de collecter le fluide de refroidissement sortant de la première chambre interne (100) qui s'échappe par la première ouverture d'extrémité (140), **caractérisé en ce que** la chambre de collecte (12) présente une entrée de collecte (121) qui est ouverte sur la paroi perforée du trou traversant (14), qui est disposée dans la direction axiale entre la première et la seconde ouverture d'extrémité (140, 141), le boîtier externe (1) comprenant un premier et un second boîtier (10, 11), qui sont disposés l'un après l'autre dans la direction axiale et sont reliés fixement de manière démontable, la première chambre interne (100) étant disposée sur le premier boîtier (10), la seconde chambre interne (113) étant disposée sur le second boîtier (11) et le séparateur (13) comprenant un premier et un second couvercle d'extrémité (102, 114) qui sont disposés l'un en face de l'autre dans la direction axiale et qui renferment la chambre de collecte (12), le premier couvercle d'extrémité (102) étant disposé sur le premier boîtier (10) et simultanément sur un côté axial de la première chambre interne (100), le second couvercle d'extrémité (114) étant disposé sur le second boîtier (11) et simultanément sur un côté axial de la seconde chambre interne (113), le trou traversant (14) étant guidé à travers le premier et le second couvercle d'extrémité (102, 114), la première ouverture d'extrémité (140) étant disposée sur le premier couvercle d'extrémité (102) et la seconde ouverture d'extrémité (141) étant disposée sur le second couvercle d'extrémité (114).

2. Module de gestion thermique selon la revendication 1, **caractérisé en ce qu'**un gradin en saillie (112) est disposé sur le premier ou le second couvercle d'extrémité (102, 114), lequel fait face à la surface de l'autre couvercle d'extrémité (102, 114) dans la direction axiale, est en contact avec l'autre couvercle d'extrémité (102, 114) et renferme la chambre de collecte (12).

3. Module de gestion thermique selon la revendication 2, **caractérisé en ce que** le nombre de gradins (112) est de deux et les deux gradins (112) sont disposés dans la direction circonférentielle de l'arbre d'entraînement (3) avec un espace intermédiaire.

4. Module de gestion thermique selon la revendication 3, **caractérisé en ce que** les gradins (112) ont une forme d'arc de cercle.

5. Module de gestion thermique selon l'une quelconque des revendications 1 à 4, **caractérisé en ce que** la chambre de collecte (12) présente une sortie (120) reliée à l'air et servant à évacuer le fluide de refroidissement évaporé de la chambre de collecte (12).

6. Module de gestion thermique selon l'une quelconque des revendications 1 à 4, **caractérisé en ce qu'**au point où les premier et second couvercles d'extrémité (102, 114) entrent en contact l'un avec l'autre, une pièce d'étanchéité (4) est disposée pour empêcher que le fluide de refroidissement s'échappe de la chambre de collecte (12) par le biais du point de contact.

7. Module de gestion thermique selon la revendication 6, **caractérisé en ce qu'**une rainure concave (111) est disposée sur le premier ou le second couvercle d'extrémité (102, 114), une partie de la pièce d'étanchéité (4) étant insérée dans la rainure concave (111) et l'autre partie faisant saillie depuis la rainure concave (114) et formant un joint de contact avec l'autre couvercle d'extrémité (102, 114).

8. Module de gestion thermique selon la revendication 6, **caractérisé en ce que** la pièce d'étanchéité (4) est une pièce en caoutchouc.

9. Module de gestion thermique selon l'une quelconque des revendications 1 à 4, **caractérisé en ce que** la liaison fixe démontable est une liaison par vissage.
